# EUROPEAN PATENT SPECIFICATION

(11) **EP 4 686 743 B1**
(45) Date of publication and mention of the grant of the patent: **11.11.2026**
(21) Application number: 25189937.3
(22) Date of filing: 16.07.2025
(51) Int. Cl.: C09D 11/36, C09D 11/38

(54) **INK COMPOSITION FOR INKJET PRINTING**
TINTENZUSAMMENSETZUNG FÜR TINTENSTRAHLDRUCK
COMPOSITION D'ENCRE POUR IMPRESSION À JET D'ENCRE

(30) Priority: 02.08.2024 JP 2024127627
(43) Date of publication of application: 04.02.2026
(73) Proprietor: Sakata INX Corporation, Osaka-shi, Osaka 541-0047 (JP)
(72) Inventor: NAKASHIMA, Okinori, Osaka, 541-0047 (JP); KINJOH, Jun, Osaka, 541-0047 (JP); OKAMOTO, Takuya, Osaka, 541-0047 (JP); TOMITA, Hiroki, Osaka, 541-0047 (JP)
(74) Representative: Müller-Boré & Partner Patentanwälte PartG mbB

(56) References cited:
- JP-A- 2005 290 035
- JP-A- 2005 350 563
- JP-B2- 5 028 440
- JP-B2- 6 337 704
- US-A1- 2018 265 719

## Description

### Background

### Field of the Invention

The present invention relates to an ink composition for inkjet printing, which is suitable for use in an inkjet recording system, and particularly to a solvent-based (also referred to as oil-based, non-aqueous, or the like) inkjet ink composition.

### Description of the Related Art

An inkjet recording method is a method of jetting an inkjet ink with high fluidity as ink particles from a minute head nozzle and recording an image on a substrate, which is placed to face the nozzle. Typically, an inkjet ink is broadly classified into an aqueous ink and a non-aqueous ink. The non-aqueous ink typically has an advantage of excellent water resistance. Further, the non-aqueous ink is broadly classified into an ink mainly containing a volatile solvent and an ink mainly containing a non-volatile solvent.

Particularly, since the ink mainly containing a non-volatile solvent is designed to be slowly dried in an ink nozzle, clogging due to a dried ink on a nozzle surface is unlikely to occur, and the number of times of cleaning the ink nozzle can be reduced. Therefore, the ink is suitably used as an ink for a high-speed inkjet printer or an industrial inkjet printer.

Several non-aqueous inkjet inks have been suggested (for example, see Japanese Patent Laid-Open Nos. H11-279467, 2003-261808, 2005-350563, 2007-126564, 2007-161890, 2010-215700, and 2012-12432) as the non-aqueous inkjet ink, and most of the inks contain a mineral oil (also referred to as a hydrocarbon-based solvent). Japanese Patent Laid-Open No. H11-279467 discloses a non-aqueous inkjet ink containing di-2-ethylhexyl sebacate and an aliphatic hydrocarbon-based solvent, Japanese Patent Laid-Open No. 2010-215700 discloses a non-aqueous (oil-based) inkjet ink containing a saturated fatty acid ester-based solvent and a hydrocarbon-based solvent, and Japanese Patent Laid-Open No. 2012-12432 discloses a non-aqueous (oil-based) inkjet ink containing a hydrocarbon-based solvent and a solvent containing an ester group and an ether group.

Further, Japanese Patent Laid-Open No. 2003-261808 discloses a non-aqueous ink composition containing an unsaturated fatty acid ester-based solvent and a non-polar solvent (naphthene-based solvent), Japanese Patent Laid-Open No. 2005-350563 discloses a non-aqueous (oil-based) inkjet ink containing an unsaturated fatty acid ester-based solvent and a hydrocarbon-based solvent, and Japanese Patent Laid-Open No. 2007-126564 discloses an inkjet ink containing an unsaturated monoester and a non-polar solvent (petroleum-based hydrocarbon).

Further, Japanese Patent Laid-Open No. 2007-161890 suggests a non-aqueous inkjet ink that contains a plant oil-derived fatty acid ester and a non-aqueous polar solvent and is considered to have a low environmental impact.

As described above, the non-aqueous (or oil-based) inkjet inks frequently use, as solvents, a combination of a fatty acid ester-based solvent and a hydrocarbon-based solvent (see Japanese Patent Laid-Open Nos. H11-279467, 2003-261808, 2005-350563, 2007-126564, 2010-215700, and 2012-12432). The fatty acid ester-based solvent (particularly, a saturated fatty acid monoester-based solvent) is highly stable and expected to have an effect of increasing the dispersibility or the like of a pigment, but tends to have high viscosity and poor low-temperature fluidity (that is, the pour point is high). Meanwhile, the hydrocarbon-based solvent has high low-temperature fluidity (that is, the pour point is low), and thus the stability and the low-temperature fluidity can be ensured by combining the fatty acid ester-based solvent and the hydrocarbon-based solvent in the non-aqueous inkjet ink.

### Summary

However, the risk of the hydrocarbon-based solvent being hazardous to human bodies has been pointed out, and thus the use of the hydrocarbon-based solvent as an ink solvent is restricted in some cases. For example, the use of mineral oils in an ink for performing printing on a packaging material or the like has been restricted in France (see website page: https://www.iri-tokyo.jp/site/tiri-news/202212-02-shien.html). Therefore, an object of the present invention is to provide a non-aqueous or oil-based inkjet ink that maintains inkjet discharge stability and preferably improves long-term stability while ensuring the low-temperature fluidity even without using a hydrocarbon-based solvent.

That is, the present invention relates to an ink composition for solvent-based inkjet printing described below.
[1] An ink composition for solvent-based inkjet printing, including: a colorant; a dispersant; and a solvent, in which the colorant includes a pigment and/or a dye, the solvent includes a saturated fatty acid diester-based solvent and an unsaturated fatty acid monoester-based solvent, a total amount of the saturated fatty acid diester-based solvent and the unsaturated fatty acid monoester-based solvent is 50% by mass or greater with respect to a total amount of the ink composition for solvent-based inkjet printing, and a mass ratio of the saturated fatty acid diester-based solvent to the unsaturated fatty acid monoester-based solvent is 2:8 to 8:2.
   It is more preferable that the present invention relate to an ink composition for solvent-based inkjet printing described below.
[2] The ink composition for solvent-based inkjet printing according to [1], in which the saturated fatty acid diester-based solvent has a pour point of -10°C or lower.
[3] The ink composition for solvent-based inkjet printing according to [1] or [2], in which the unsaturated fatty acid monoester-based solvent has a pour point of 0°C or lower.
[4] The ink composition for solvent-based inkjet printing according to any one of [1] to [3], in which the ink composition contains no hydrocarbon-based solvent or 5% by mass or less of a hydrocarbon-based solvent with respect to the total amount of the ink composition for solvent-based inkjet printing.
[5] The ink composition for solvent-based inkjet printing according to any one of [1] to [4], further including: a saturated fatty acid monoester.
[6] The ink composition for solvent-based inkjet printing according to any one of [1] to [5], in which the colorant is a black pigment and/or a black dye.
[7] The ink composition for solvent-based inkjet printing according to any one of [1] to [6], in which the ink composition contains no water or 3% by mass or less of water with respect to the total amount of the ink composition for solvent-based inkjet printing.
[8] The ink composition for solvent-based inkjet printing according to any one of [1] to [7], in which the dispersant is a polymer dispersant.

The ink composition for solvent-based inkjet printing of the present invention has low-temperature fluidity and inkjet discharge stability even in a case of containing no hydrocarbon-based solvent. It is more preferable that the ink composition for solvent-based inkjet printing of the present invention also have long-term stability during storage of the ink.

### Detailed Description of Embodiments

### 1. In regard to ink composition for solvent-based inkjet printing

"Ink composition for solvent-based inkjet printing (hereinafter, also referred to as an ink composition)" of the present invention contains 1) a colorant, 2) a dispersant, and 3) a solvent, and contains a specific fatty acid ester-based solvent as 3) the solvent. Further, the ink composition of the present invention can contain 4) other optional additives.

### 1-1. Colorant

It is preferable that the colorant contained in the ink composition of the present invention be any one or both of a pigment and a dye.

The pigment is not particularly limited, and may be any of an inorganic pigment or an organic pigment. Examples of the inorganic pigment include carbon black, titanium oxide, red iron oxide, cobalt blue, ultramarine, Prussian blue, kaolin, and silica. Examples of the organic pigment include an insoluble azo pigment such as Toluidine Red, Toluidine Maroon, Hansa Yellow, Benzidine Yellow, or Pyrazolone Red, an oil-based azo pigment such as Lithol Red, Helio Bordeaux, Pigment Scarlet, or Permanent Red 2B, a derivative from a vat dye such as alizarin, indanthrone, or thioindigo maroon, a phthalocyanine-based organic pigment such as Phthalocyanine Blue or Phthalocyanine Green, a quinacridone-based organic pigment such as Quinacridone Red or Quinacridone Magenta, a perylene-based organic pigment such as Perylene Red or Perylene Scarlet, an isoindolinone-based organic pigment such as Isoindolinone Yellow or Isoindolinone Orange, a pyranthrone-based organic pigment such as Pyranthrone Red or Pyranthrone Orange, a thioindigo-based organic pigment, a condensed azo-based organic pigment, a benzimidazolone-based organic pigment, a quinophthalone-based organic pigment such as Quinophthalone Yellow, an isoindoline-based organic pigment such as Isoindoline Yellow, an azo lake pigment, and other pigments such as Flavanthrone Yellow, Acylamide Yellow, Nickel Azo Yellow, Copper Azomethine Yellow, Perinone Orange, Anthrone Orange, Dianthraquinonyl Red, and Dioxazine Violet. The ink composition may contain a single pigment or a combination of these pigments as appropriate.

The particle size of the pigment may be set such that the ink composition is fine enough to carry out inkjet printing, and the average particle size of the pigment is, for example, preferably in a range of 0.01 to 0.3 µm. Further, the content of the pigment in the ink composition varies depending on the type of the pigment and the printing applications of the ink composition, but may be in a range of 0.1% to 20% by mass.

The dye can be, for example, a known oil-soluble dye of the related art, such as an azo-based dye, an anthraquinone-based dye, or an azine-based dye, or a known fluorescent dye of the related art.

Specific examples of the oil-soluble dye include C.I. Disperse Yellow 39, 42, 51, 54, 67, 71, 86, 92, 127, 134, 149, 160, 186, and 199, C.I. Solvent Yellow 114, 163, and the like (all yellow dyes); C.I. Disperse Orange 81, 118, 119, and the like (all orange dyes); C.I. Disperse Red 53, 55, 55:1, 59, 60, 70, 75, 86, 86:1, 91, 92, 127, 146, 190, 190:1, 191, 207, 283, and 302, C.I. Solvent Red 146 and the like (all red dyes); C.I. Disperse Violet 8, 23, 26, 27, 28, 35, 36, and 57, C.I. Disperse Blue 5, 19, 54, 55, 56, 58, 60, 64, 64:1, 72, 72:1, 73, 73:1, 77, 81, 81:1, 87, 95, 108, 143, 145, 181, 185, and 197, and C.I. Solvent Blue 36, 63, 83, 105, 111, and the like (all violet to blue dyes).

Specific representative examples of the fluorescent dye according to the Colour Index International (C.I.) include BASIC YELLOW 1, BASIC YELLOW 40, BASIC RED 1, BASIC RED 13, BASIC VIOLET 11:1, BASIC VIOLET 7, BASIC VIOLET 10, BASIC ORANGE 22, BASIC BLUE 7, BASIC GREEN 1, ACID YELLOW 3, ACID YELLOW 7, ACID RED 52, ACID RED 77, ACID RED 92, ACID BLUE 9, DISPERSE YELLOW 82, DISPERSE ORANGE 11, DISPERSE RED 58, DISPERSE BLUE 7, DIRECT YELLOW 85, DIRECT ORANGE 8, DIRECT RED 9, DIRECT BLUE 22, DIRECT GREEN 6, FLUORESCENT BRIGHTENING AGENT 55, FLUORESCENT BRIGHTENING WHITE XWS 52, FLUORESCENT BRIGHTENING AGENT 162, FLUORESCENT BRIGHTENING AGENT 112, SOLVENT YELLOW 44, SOLVENT YELLOW 116, SOLVENT RED 49, SOLVENT BLUE 5, SOLVENT PINK, SOLVENT GREEN 7, PIGMENT YELLOW 1, PIGMENT BLUE 15, PIGMENT GREEN 7, PIGMENT RED 53, PIGMENT RED 57, and FBA 184. These dyes can be used alone or in combination of two or more kinds thereof as appropriate.

The ink composition of the present invention is an ink composition for solvent-based (oil-based) inkjet printing, and the main application thereof may be marking or coating. Therefore, it is preferable that the ink composition of the present invention be a black ink with high visibility in some cases, and thus the ink composition contains preferably a black colorant, more preferably a black dye having a black color tone by combining dyes or a black pigment such as carbon black, and still more preferably carbon black.

### 1-2. Dispersant

The dispersant contained in the ink composition of the present invention is a component for mainly dispersing colorants (for example, pigments). Examples of the dispersant include hydroxyl group-containing carboxylic acid ester, a salt of long-chain polyaminoamide and high-molecular-weight acid ester, a salt of a high-molecular-weight polycarboxylic acid, a salt of long-chain polyaminoamide and polar acid ester, high-molecular-weight unsaturated acid ester, a high-molecular copolymer, modified polyurethane, modified polyacrylate, a polyether ester type anionic surfactant, a naphthalenesulfonic acid formalin condensate salt, an aromatic sulfonic acid formalin condensate salt, polyoxyethylene alkyl phosphoric acid ester, polyoxyethylene nonylphenyl ether, and stearylamine acetate.

It is preferable that the dispersant have an affinity for a solvent, and the dispersant is preferably a polymer dispersant (polymer type dispersant) in some cases. Examples of the polymer dispersant include a high-molecular-weight unsaturated fatty acid ester, a high-molecular copolymer, modified polyurethane, modified polyacrylate, a polyether ester type anionic surfactant, a naphthalenesulfonic acid formalin condensate salt, an aromatic sulfonic acid formalin condensate salt, polyoxyethylene alkyl phosphoric acid ester, polyoxyethylene nonylphenyl ether, and polyester polyamine.

Among the polymer dispersants, a polymer dispersant having an ester structure is preferably used in some cases. The polymer dispersant having an ester structure can impart storage stability and discharge stability to the ink composition in some cases. Specific examples of the polymer dispersant having an ester structure include SOLSPERSE 9000, 13940, 17000, 18000, and 28000 (all manufactured by Lubrizol Corporation), DA-703-50, DA-7300, and DA234 (all manufactured by Kusumoto Chemicals, Ltd.), Disperbyk-101 (manufactured by BYK-Chemie GmbH), and KFI-M and HINOACT (both manufactured by Kawaken Fine Chemicals Co., Ltd.). The polymer dispersant may be an alkyd resin. Specific examples of the alkyd resin include BECKOSOL OD-E-198-50, ES-5003-50, ES-4505-60X, and ES-5103-50X (all manufactured by DIC Corporation), and HARIPHTHAL 7250, 915-60L, and SB7150X (all manufactured by Harima Chemicals Group, Inc.).

The content of the dispersant (preferably the polymer dispersant) in the ink composition may be set to obtain sufficient dispersibility of the colorant (pigment or the like), but the content thereof is typically in a range of 0.1% to 10% by mass in many cases and may also be in a range of 1% to 6% by mass with respect to the amount of the ink composition.

### 1-3. Solvent

The ink composition of the present invention contains a fatty acid ester-based solvent as a solvent and contains at least A. a saturated fatty acid diester-based solvent and B. an unsaturated fatty acid monoester-based solvent as the fatty acid ester-based solvent. Further, the fatty acid ester-based solvent may include other fatty acid ester-based solvents such as C. a saturated fatty acid monoester. Further, the fatty acid ester-based solvent may be a plant oil-derived fatty acid ester.

It is preferable that the solvent contained in the ink composition of the present invention be non-volatile. De-cap (also referred to as latency) can be suppressed by using a non-volatile solvent. The de-cap denotes a phenomenon in which liquid droplets are abnormally ejected or not ejected at all when printing is resumed after interruption of inkjet printing. The de-cap is usually caused by a local change in ink density in the vicinity of an opening of a nozzle due to evaporation of a solvent of an ink. The ink composition of the present invention, which contains a non-volatile solvent, can suppress the de-cap.

At least some of the solvents contained in the ink composition of the present invention have a boiling point of preferably 200°C or higher, more preferably 220°C or higher, and still more preferably 240°C or higher. Further, most of the solvents contained in the ink composition of the present invention have a boiling point of preferably 150°C or higher. For example, 60% by mass or greater, preferably 70% by mass or greater, more preferably 80% by mass or greater, and still more preferably 90% by mass or greater of the solvents contained in the ink composition have a boiling point of preferably 150°C or higher and more preferably 180°C or higher.

### 1-3-1. Saturated fatty acid diester-based solvent

The ink composition of the present invention contains a saturated fatty acid diester-based solvent. The saturated fatty acid diester-based solvent is a diester body of a di- or higher valent saturated fatty acid and preferably a divalent saturated fatty acid. The ester of the saturated fatty acid diester is preferably an alkyl ester, particularly preferably an ester of an alkyl having 1 to 12 carbon atoms, and also preferably an ester of a branched chain-like alkyl in some cases.

Examples of the di- or higher valent saturated fatty acid include sebacic acid, adipic acid, and azelaic acid. Examples of the diester of sebacic acid include di-2-ethylhexyl sebacate, dibutyloctyl sebacate, diethyl sebacate, dibutyl sebacate, and dioctyl sebacate. Examples of the diester of adipic acid include di-2-ethylhexyl adipate, diisononyl adipate, diisodecyl adipate, isopropyl adipate, diisooctyl adipate, di(2-propylheptyl) adipate, and diisotridecyl adipate. Examples of the diester of azelaic acid include di-2-ethylhexyl azelate and diisodecyl azelate.

The saturated fatty acid diester-based solvent has more satisfactory low-temperature fluidity as compared with that of the saturated fatty acid monoester. Specifically, the saturated fatty acid diester-based solvent has a pour point of preferably -10°C or lower, more preferably -20°C or lower, still more preferably -30°C or lower, even still more preferably -40°C or lower, particularly preferably -50°C or lower, and most preferably -60°C or lower. The low-temperature fluidity of the ink composition of the present invention can be ensured by using the saturated fatty acid diester-based solvent with satisfactory low-temperature fluidity.

The term "pour point" in the present specification denotes a value measured according to the procedures described in JIS-K 2269. The procedures described in JIS-K 2269 simply include cooling a test tube containing a measurement sample after preheating the test tube to 46°C, starting measurement at a temperature 10°C higher than the predicted pour point, taking out the test tube from a cooling bath every time the temperature is lowered by 2.5°C and making the test tube to fall down to a side, and defining the temperature 2.5°C higher than the previous measurement temperature (temperature at which the sample no longer has fluidity) as the pour point when the sample does not move for 5 seconds.

### 1-3-2. Unsaturated fatty acid monoester-based solvent

The ink composition of the present invention contains an unsaturated fatty acid monoester-based solvent. The unsaturated fatty acid monoester-based solvent is a monoester body of a mono- or higher valent unsaturated fatty acid and preferably a monovalent unsaturated fatty acid. The ester of the unsaturated fatty acid monoester is preferably an alkyl ester and more preferably an ester of an alkyl having 1 to 12 carbon atoms.

Further, the unsaturated fatty acid is a fatty acid having one or two or more unsaturated bonds (preferably a carbon-carbon double bond) and preferably a fatty acid having one unsaturated bond. Further, an unsaturated fatty acid having 15 to 25 carbon atoms is preferable as the unsaturated fatty acid, and typical examples thereof include oleic acid, linoleic acid, and soybean oil fatty acid. Examples of a monoester of the oleic acid include methyl oleate, ethyl oleate, isopropyl oleate, isobutyl oleate, and 2-ethylhexyl oleate. Examples of a monoester of the linoleic acid include methyl linoleate, ethyl linoleate, and isobutyl linoleate. Examples of a monoester of the soybean oil fatty acid include methyl soybean oil and isobutyl soybean oil.

The unsaturated fatty acid monoester-based solvent has fluidity higher than the fluidity of the saturated fatty acid monoester-based solvent in many cases. For example, the unsaturated fatty acid monoester-based solvent has a pour point of preferably 0°C or lower and more preferably -5°C or lower. Therefore, the fluidity of the ink composition of the present invention at a low temperature can be further ensured by using both the saturated fatty acid diester-based solvent and the unsaturated fatty acid monoester-based solvent.

Further, the unsaturated fatty acid monoester-based solvent has a low viscosity in many cases (for example, the viscosity of isobutyl oleate at 20°C is 9 cps), and the viscosity of the ink composition of the present invention can be decreased to the viscosity suitable for inkjet printing.

### 1-3-3. Saturated fatty acid monoester-based solvent

The ink composition of the present invention may contain a saturated fatty acid monoester-based solvent. The saturated fatty acid monoester is a monoester body of a mono- or higher valent saturated fatty acid and preferably a monovalent saturated fatty acid. The ester of the saturated fatty acid monoester is preferably an alkyl ester and more preferably an ester of an alkyl having 1 to 12 carbon atoms.

Examples of the saturated fatty acid include stearic acid, palmitic acid, myristic acid, lauric acid, isostearic acid, and pelargonic acid. Examples of a monoester of the stearic acid include 2-ethylhexyl stearate and butyl stearate. Examples of a monoester of the palmitic acid include isopropyl palmitate, 2-ethylhexyl palmitate, and methylheptyl palmitate. Examples of a monoester of the myristic acid include isopropyl myristate and methylheptyl myristate. Examples of a monoester of the lauric acid include methyl laurate, butyl laurate, and methylheptyl laurate. Examples of a monoester of the isostearic acid include decyl isostearate. Examples of a monoester of the pelargonic acid include isododecyl pelargonate.

It is preferable that the saturated fatty acid monoester have a relatively high boiling point. Specifically, the saturated fatty acid monoester has a boiling point of preferably 200°C or higher, more preferably 220°C or higher, and still more preferably 240°C or higher. Further, the saturated fatty acid monoester has a pour point of higher than -10°C in many cases or has a pour point of higher than 0°C in some cases. The ink composition of the present invention can suppress unintended drying (for example, drying of the ink composition adhering to an ink nozzle of an inkjet printing device) by using the saturated fatty acid monoester having a relatively high boiling point.

Further, the saturated fatty acid monoester can maintain the printing properties when the temperature of the ink composition of the present invention is changed (when the temperature of the ink composition is increased), that is, the saturated fatty acid monoester can increase "followability to a change in temperature" of the ink composition. The ink composition of the present invention is an ink for inkjet printing, but the print head in the inkjet printing device generates heat in a case where the inkjet printing is continuously performed for a long time, and accordingly, the temperature of the ink composition is also increased. When the temperature of the ink composition is increased, the quality of a printed material is degraded, and for example, distortion of a printed image, dot omission, or the like may occur. Since the ink composition of the present invention contains the saturated fatty acid monoester, the ink composition has the followability to a change in temperature and thus can prevent degradation in the quality of the printed material during such continuous printing.

### 1-3-4. Other solvents

The ink composition of the present invention may contain a hydrocarbon-based solvent, but the amount of the hydrocarbon-based solvent is preferably small or zero in some cases. The hydrocarbon-based solvent is also referred to as a non-polar solvent, a mineral oil, or the like. The hydrocarbon-based solvent is a multi-component-based non-polar solvent obtained from petroleum, and the concept thereof includes an aliphatic hydrocarbon-based solvent (paraffin-based solvent or the like), a cyclic hydrocarbon-based solvent (naphthene-based solvent or the like), an aromatic hydrocarbon-based solvent, or the like.

The hydrocarbon-based solvent can impart self-lubricating properties, the followability to a change in temperature, and the low-temperature fluidity to the ink composition, and thus has been widely used as a solvent of an ink for solvent-based inkjet printing. Meanwhile, the risk of the hydrocarbon-based solvent being hazardous to living bodies (human bodies) has been pointed out, and thus the use of the hydrocarbon-based solvent as an ink solvent is restricted in some cases. The ink composition of the present invention has low-temperature fluidity and followability to a change in temperature even when the ink composition contains no hydrocarbon-based solvent.

Further, the ink composition of the present invention contains a small amount of the hydrocarbon-based solvent in some cases, and the amount thereof is preferably 5% by mass or less, more preferably 3% by mass or less, still more preferably 1% by mass or less, and most preferably 0% by mass in some cases with respect to the total amount of the ink composition.

The ink composition of the present invention may have other organic solvents in addition to the fatty acid ester-based solvent. Examples of the other organic solvents include an alcohol-based solvent, an ether-based solvent, and a higher fatty acid-based solvent. Examples of the alcohol-based solvent may include higher alcohols (for example, alcohols having 6 or more carbon atoms and preferably 10 or more carbon atoms) such as isomyristyl alcohol, isopalmityl alcohol, isostearyl alcohol, and oleyl alcohol. Examples of the ether-based solvent include diethylene glycol monobutyl ether, ethylene glycol monobutyl ether, propylene glycol monobutyl ether, propylene glycol dibutyl ether, triethylene glycol monobutyl ether, and triethylene glycol monomethyl ether. Examples of the higher fatty acid-based solvent include isononanoic acid, isomyristic acid, hexadecanoic acid, isopalmitic acid, oleic acid, and isostearic acid.

The ink composition of the present invention contains preferably substantially no water, but can contain 3% by mass or less or 1% by mass or less of water with respect to the amount of the ink composition.

### 1-3-5. Composition of solvent

The ink composition of the present invention contains the saturated fatty acid diester-based solvent and the unsaturated fatty acid monoester-based solvent, and the total amount of these solvents is 50% by mass or greater, preferably 55% by mass or greater, more preferably 60% by mass or greater, and still more preferably 65% by mass or greater, and preferably 93% by mass or less and more preferably 90% by mass or less with respect to the amount of the ink composition. Both the saturated fatty acid diester-based solvent and the unsaturated fatty acid monoester-based solvent have a relatively low pour point (for example, a pour point lower than the pour point of the saturated fatty acid monoester), and thus the low-temperature fluidity of the ink composition can be increased by setting the total content of both solvents to a certain value or greater.

The relative contained mass ratio of the saturated fatty acid diester-based solvent to the unsaturated fatty acid monoester-based solvent contained in the ink composition of the present invention (saturated fatty acid diester-based solvent:unsaturated fatty acid monoester-based solvent) is in a range of 2:8 to 8:2 and preferably in a range of 3:7 to 7:3. The unsaturated group of the unsaturated fatty acid monoester-based solvent may be oxidized during the storage of the ink composition, and as a result, the storage stability of the ink composition is decreased in some cases. Therefore, the long-term stability of the ink composition is likely to be increased by setting the content ratio of the unsaturated fatty acid monoester-based solvent to a certain value or less. Further, since the unsaturated fatty acid monoester-based solvent has a viscosity lower than the viscosity of the saturated fatty acid dieter-based solvent, the viscosity of the ink composition can be decreased and the discharge stability can be increased by setting the content ratio of the unsaturated fatty acid monoester-based solvent to a certain value or greater.

The ink composition of the present invention can achieve both the low-temperature fluidity and the discharge stability by containing a combination of a predetermined amount of the saturated fatty acid diester-based solvent and the unsaturated fatty acid monoester-based solvent, and it is advantageous that the ink composition further contains a saturated fatty acid monoester-based solvent in some cases. For example, the followability to a change in temperature can be further increased in some cases when the saturated fatty acid monoester-based solvent is blended into the ink composition. The content of the saturated fatty acid monoester-based solvent may be 0% by mass or greater, preferably 5% by mass or greater in some cases, or may be 10% by mass or greater, and is normally 40% by mass or less, and may be 30% by mass or less, or 25% by mass or less with respect to the amount of the ink composition.

### 1-4. Other additives

The ink composition of the present invention may contain other components in addition to the colorants, the dispersants, and the solvents. Examples of the other components include a dispersing aid (also referred to as a pigment derivative), an inert resin, a leveling agent, and a preservative.

The dispersing aid, along with the dispersant, can increase the dispersibility of the pigment. The dispersing aid denotes a derivative of a pigment, and examples of the dispersing aid include a sulfonic acid derivative, a sulfonamide derivative, an alkylamino derivative, and an alkyl derivative of pigments. Examples of the dispersing aid also include SOLSPERSE 5000, SOLSPERSE 12000, and SOLSPERSE 22000 (all manufactured by Lubrizol Corporation), and EFKA 745 and EFKA6750 (both manufactured by EFKA CHEMICALS B.V.). The content of the dispersing aid is 2% by mass or less with respect to the amount of the ink composition.

The inert resin can improve the adhesion of the ink composition to a substrate and can adjust the spread of dots of the ink composition on a substrate. It is preferable that the inert resin be dissolved in the ink composition. Examples of the inert resin include, but not limited to, a (meth)acrylic resin, a styrene-(meth)acrylic resin, a styrene-maleic acid-based resin, a rosin-based resin, a rosin ester-based resin, an ethylene-vinyl acetate-based resin, a petroleum-based resin, a coumarone indene-based resin, a terpene phenol-based resin, a phenol resin, a urethane resin, a melamine resin, a urea resin, an epoxy-based resin, a cellulose-based resin, a vinyl chloride-vinyl acetate resin, a xylene resin, an alkyd resin, an aliphatic hydrocarbon resin, a butyral resin, a maleic acid resin, and a fumaric acid resin. The content of the inert resin can be 3% by mass or less with respect to the amount of the ink composition.

The leveling agent can be a surfactant, for example, a silicon surfactant, a fluorine surfactant, or a polyoxyethylene adduct which is a nonionic surfactant. Among these, from the viewpoint of increasing the wettability of the ink composition and preventing foaming, a silicon surfactant is preferable. The content of the leveling agent can be 2% by mass or less with respect to the amount of the ink composition.

### 1-5. Physical properties of ink composition

The viscosity of the ink composition of the present invention at 20°C is preferably in a range of 5 to 30 mPa·s and more preferably in a range of 8 to 16 mPa·s. In a case where the viscosity is adjusted, printing can be performed by inkjet printing, and the ink can be stably ejected even when the temperature of a print head for inkjet printing changes. Further, the coagulation point of the ink composition of the present invention can be set to - 5°C or lower and can also be set to -10°C or lower or -20°C or lower.

### 1-6. Method of preparing ink composition

The ink composition of the present invention can be prepared with reference to a method of preparing an ink for solvent-based inkjet printing of the related art. Specifically, the ink composition can be prepared by mixing a mixture of the components using a dispersion machine (for example, a ball mill, a sand mill, an attritor, a roll mill, an agitator, a Henschel mixer, a colloid mill, an ultrasonic homogenizer, a jet mill, or an angmill), and the resulting mixture may be filtered through a known filter such as a membrane filter as necessary.

Further, the ink composition may be prepared by preparing a base ink (a condensate of a colorant (pigment or the like)) and mixing the base ink with other components. The base ink can be obtained by mixing and kneading the colorant, the dispersant, some of the solvents, and an optional dispersing aid.

### 2. In regard to applications of ink composition for solvent-based inkjet printing

The ink composition for solvent-based inkjet printing of the present invention (ink composition) is used by adhering to and being printed on a substrate by an inkjet printing method. The inkjet printing method is not particularly limited, and examples thereof include a charge control method of ejecting an ink using an electrostatic attraction force, a drop-on-demand method (pressure pulse method) of using a vibration pressure of a piezoelectric element, an acoustic inkjet method of changing an electric signal into an acoustic beam, irradiating an ink with the acoustic beam, and ejecting the ink using a radiation pressure, and a thermal type inkjet method of heating an ink to form bubbles and using the generated pressure. Further, the inkjet printing may be continuous type inkjet printing, and in such a case, the conductivity level of the ink composition can be adjusted by adding a conductivity-adding agent to the ink composition. Further, the print head in the inkjet printing device may be in a multi-pass mode (serial head mode) or in a single-pass mode (line head mode).

The substrate, on which the ink composition of the present invention is printed, is not particularly limited, but is preferably an absorbent base material. Examples of the absorbent base material include paper base materials and fabrics. Particularly, base materials with high absorbency, such as cardboard and corrugated cardboard, are preferable as the substrate. Further, since the ink composition of the present invention is not required to contain a hydrocarbon-based solvent, the risk of being hazardous to human health is further reduced, and recycling of printed materials can be promoted. Therefore, the ink composition of the present invention is advantageously used as an ink for inkjet printing for industrial use, for which a large amount of ink is used.

### Examples

Hereinafter, the present invention will be described in more detail with reference to examples. However, the present invention should not be construed as being limited by the description of such examples.

### A. Material used to prepare ink composition

### A-1. Colorant

Carbon black: MA7 (manufactured by MitsubishiChemical Corporation)
· Magenta pigment: Fastogen Super Magenta RGT (manufactured by DIC Corporation)

### A-2. Dispersant

· SOLSPERSE 18000 (manufactured by Lubrizol Corporation)

### A-3. Solvent

### A-3-1. Unsaturated fatty acid monoester

Methyl oleate (EXCEPARL M-OL, manufactured by Kao Corporation), pour point of lower than -5°C, boiling point of 218.5°C
· Isobutyl oleate (VINYCIZER 30, manufactured by Kao Corporation), pour point of lower than -10°C
· 2-Ethylhexyl oleate (UNISTER MB-881, manufactured by NOF Corporation), pour point of -40°C, boiling point of 465.8 ± 24.0°C

### A-3-2. Saturated fatty acid diester

· Di-2-ethylhexyl azelate (SANSO CIZER DOZ, manufactured by New Japan Chemical Co., Ltd.), pour point of lower than -60°C, boiling point of higher than 282°C
· Di-2-ethylhexyl adipate (SANSO CIZER DOA, manufactured by New Japan Chemical Co., Ltd.), pour point of lower than -60°C, boiling point of 417°C
· Diisononyl adipate (SANSO CIZER DINA, manufactured by New Japan Chemical Co., Ltd.), pour point of lower than -60°C, boiling point of higher than 250°C
· Diisodecyl adipate (SANSO CIZER DIDA, manufactured by New Japan Chemical Co., Ltd.), pour point of lower than -60°C, boiling point of 282°C
· Di-2-ethylhexyl sebacate (SANSO CIZER DOS, manufactured by New Japan Chemical Co., Ltd.), pour point of lower than -60°C, boiling point of about 248°C

### A-3-3. Saturated fatty acid monoester

· Methyl laurate (EXCEPARL ML-85, manufactured by Kao Corporation), pour point of lower than 20°C, boiling point of about 260°C
· Isopropyl myristate (EXCEPARL IPM, manufactured by Kao Corporation), pour point of 2°C to 8°C, boiling point of about 304°C
· Isopropyl palmitate (EXCEPARL IPP, manufactured by Kao Corporation), pour point of 8°C to 15°C, boiling point of about 332°C
· 2-Ethylhexyl stearate (EXCEPARL EH-S, manufactured by Kao Corporation), pour point of -9°C, boiling point of about 40°C

### A-3-4. Other solvents

· Saturated hydrocarbon-based solvent (P-40, manufactured by MORESCO Corporation)

### A-4. Pigment derivative

### SOLSPERSE 5000 (manufactured by Lubrizol Corporation)

### A-5. Resin

· Methacrylic resin (BR-87, manufactured by Mitsubishi Chemical Corporation)

### A-6. Leveling agent

· Silicon-based surface adjuster (BYK-315N, manufactured by BYK-Chemie GmbH)

### B. Procedure of preparing ink composition

Each ink composition of examples and comparative examples (excluding Comparative Example 9) was prepared according to the formulations (the blending ratio of each component listed in Tables 1 and 2 is in units of % by mass) listed in Tables 1 and 2.

### B-1. Production of base ink for solvent-based inkjet printing

10 parts by mass of a dispersant (SOLSPERSE 18000) was dissolved in 59 parts by mass of a unsaturated fatty acid monoester (methyl oleate, isobutyl oleate, or 2-ethylhexyl oleate), and the mixture was mixed with 30 parts by mass of a colorant (Carbon Black MA-7 or a magenta pigment) and, as necessary, 1 part by mass of a pigment derivative (SOLSPERSE 5000) while being stirred, and the resulting mixture was kneaded using a bead mill, thereby obtaining a non-aqueous inkjet base ink. Here, in Examples 8 and 11 and Comparative Examples 3 and 8, a non-aqueous inkjet base ink was obtained by changing the unsaturated fatty acid monoester to a saturated diester (di-2-ethylhexyl azelate).

### B-2. Production of ink composition for solvent-based inkjet printing

The base ink was mixed with each material while being stirred such that the blending formulation (the blending ratio of each material is in units of % by mass) listed in Table 1 or 2 was obtained, thereby obtaining a non-aqueous inkjet ink composition of each example and each comparative example.

### Preparation of ink composition of Comparative Example 9

### B-1. Production of base ink for solvent-based inkjet printing

10 parts by mass of a dispersant (SOLSPERSE 18000) was dissolved in 59 parts by mass of a hydrocarbon-based solvent, and the mixture was mixed with 30 parts by mass of a colorant (Carbon Black MA-7) and 1 part by mass of a pigment derivative (SOLSPERSE 5000) while being stirred, and the resulting mixture was kneaded using a bead mill, thereby obtaining a non-aqueous inkjet base ink.

### B-2. Production of ink composition for solvent-based inkjet printing

The base ink was mixed with each material while being stirred such that the blending formulation (the blending ratio of each material is in units of % by mass) listed in Table 2 was obtained, thereby obtaining a non-aqueous inkjet ink composition of each example and each comparative example.

### C. Evaluation of ink composition

### C-1. Low-temperature fluidity

Each ink composition obtained in the examples and the comparative examples was poured into a glass bottle, the bottle was sealed, the ink was stored at -20°C for 24 hours, and the state of the ink was evaluated according to the following evaluation criteria.
∘: Freezing and solid matter caused by freezing were not found, and the fluidity was maintained.
Δ: Freezing to the extent that the frozen state was returned to the original state when the bottle was slightly shaken and solid matter caused by freezing were found.
×: Freezing to the extent that the frozen state was not returned to the original state even when the bottle was strongly shaken and solid matter caused by freezing were found.

### C-2. Discharge stability

Each of the ink compositions obtained in the examples and the comparative examples was printed on a vinyl chloride sheet (trade name: MD5, manufactured by METAMARK), and the discharge stability was evaluated according to the following evaluation criteria based on the number of sheets on which unprinted parts were generated.
∘: Unprinted parts were generated after the 71st sheet or were not generated until the 100th sheet.
Δ: Unprinted parts were generated between the 30th sheet and the 70th sheet.
×: Unprinted parts were generated before the 30th sheet.

### C-3. Storage stability

Each ink composition obtained in the examples and the comparative examples was poured into a glass bottle, the bottle was sealed, the ink was stored at 60°C for 28 days, and the state of the ink was evaluated according to the following evaluation criteria.
∘: Both thickening and sediment were not found.
Δ: Thickening and sediment to the extent that the thickened and sediment states were returned to the original state when the bottle was slightly shaken were found.
×: Thickening and sediment to the extent that the thickened and sediment states were not returned to the original state even when the bottle was strongly shaken were found.

**Table 1**

| Example | | | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|
| Colorant | Carbon black | | 9 | 9 | 9 | 9 | 9 | 9 | 9 | 9 | 9 | 9 | 9 | 9 | 9 | 9 | |
| | Magenta pigment | | | | | | | | | | | | | | | | 9 |
| Dispersant | SOLSPERSE 18000 | | 3 | 3 | 3 | 3 | 3 | 3 | 3 | 3 | 3 | 3 | 3 | 3 | 3 | 3 | 3 |
| Pigment derivative | SOLSPERSE 5000 | | 0.3 | 0.3 | 0.3 | 0.3 | 0.3 | 0.3 | 0.3 | 0.3 | 0.3 | 0.3 | 0.3 | 0.3 | 0.3 | | |
| Solvent | Unsaturated fatty acid monoester | Methyl oleate | 30 | | | 30 | 30 | 30 | 30 | 10 | 40 | 70.16 | 17.54 | 30 | 30 | 30 | 30 |
| | | Isobutyl oleate | | 30 | | | | | | | | | | | | | |
| | | 2-Ethylhexyl oleate | | | 30 | | | | | | | | | | | | |
| | Saturated fatty acid diester | Di-2-ethylhexyl azelate | 40 | 40 | 40 | | | | | 40 | 10 | 17.54 | 70.16 | 40 | 40 | 40 | 40 |
| | | Di-2-ethylhexyl adipate | | | | 40 | | | | | | | | | | | |
| | | Diisononyl adipate | | | | | 40 | | | | | | | | | | |
| | | Diisodecyl adipate | | | | | | 40 | | | | | | | | | |
| | | Di-2-ethylhexyl sebacate | | | | | | | 40 | | | | | | | | |
| | Saturated fatty acid monoester | Methyl laurate | 17.7 | 17.7 | 17.7 | 17.7 | 17.7 | 17.7 | 17.7 | 37.7 | 37.7 | | | 16.7 | 17.6 | 18.0 | 18.0 |
| | | Isopropyl myristate | | | | | | | | | | | | | | | |
| | | Isopropyl palmitate | | | | | | | | | | | | | | | |
| | | 2-Ethylhexyl stearate | | | | | | | | | | | | | | | |
| | Other solvents | Hydrocarbon -based solvent | | | | | | | | | | | | | | | |
| Resin | Methacrylic resin | | | | | | | | | | | | | 1.0 | | | |
| Leveling agent | Silicon-based surface adjusting agent | | | | | | | | | | | | | | 0.1 | | |
| Total amount | | | 100 | 100 | 100 | 100 | 100 | 100 | 100 | 100 | 100 | 100 | 100 | 100 | 100 | 100 | 100 |
| Evaluation | Low-temperature fluidity | | ○ | ○ | ○ | ○ | ○ | ○ | ○ | ○ | ○ | ○ | ○ | ○ | ○ | ○ | ○ |
| | Discharge stability | | ○ | ○ | ○ | ○ | ○ | ○ | ○ | ○ | ○ | ○ | ○ | ○ | ○ | ○ | ○ |
| | Storage stability | | ○ | ○ | ○ | ○ | ○ | ○ | ○ | ○ | ○ | ○ | ○ | ○ | ○ | ○ | ○ |
| | Hydrocarbon-based solvent | | Absen t | Absen t | Absen t | Absen t | Absen t | Absen t | Absen t | Absen t | Absen t | Absen t | Absen t | Absen t | Absen t | Absen t | Absen t |

**Table 2**

| Comparative Example | | | 1 | 2 | 3 | 4 | 5 | 6 | 7 | 8 | 9 |
|---|---|---|---|---|---|---|---|---|---|---|---|
| Colorant | Carbon black | | 9 | 9 | 9 | 9 | 9 | 9 | 9 | 9 | 9 |
| | Magenta pigment | | | | | | | | | | |
| Dispersant | SOLSPERSE 18000 | | 3 | 3 | 3 | 3 | 3 | 3 | 3 | 3 | 3 |
| Pigment derivative | SOLSPERSE 5000 | | 0.3 | 0.3 | 0.3 | 0.3 | 0.3 | 0.3 | 0.3 | 0.3 | 0.3 |
| Solvent | Unsaturated fatty acid monoester | Methyl oleate | 45 | 78.93 | 8.77 | 30 | 30 | 30 | 30 | 17 | |
| | | Isobutyl oleate | | | | | | | | | |
| | | 2-Ethylhexyl oleate | | | | | | | | | |
| | Saturated fatty acid diester | Di-2-ethylhexyl azelate | 5 | 8.77 | 78.93 | | | | | 23 | |
| | | Di-2-ethylhexyl adipate | | | | | | | | | |
| | | Diisononyl adipate | | | | | | | | | |
| | | Diisodecyl adipate | | | | | | | | | |
| | | Di-2-ethylhexyl sebacate | | | | | | | | | |
| | Saturated fatty acid monoester | Methyl laurate | 37.7 | | | 57.7 | 17.7 | 17.7 | 17.7 | 47.7 | |
| | | Isopropyl myristate | | | | | 40 | | | | |
| | | Isopropyl palmitate | | | | | | 40 | | | |
| | | 2-Ethylhexyl stearate | | | | | | | 40 | | |
| | Other solvents | Saturated hydrocarbon-based solvent | | | | | | | | | 87.7 |
| Resin | Methacrylic resin | | | | | | | | | | |
| Leveling agent | Silicon-based surface adjusting agent | | | | | | | | | | |
| Total amount | | | 100 | 100 | 100 | 100 | 100 | 100 | 100 | 100 | 100 |
| Evaluation | Low-temperature fluidity | | ○ | ○ | ○ | × | Δ | × | Δ | × | ○ |
| | Discharge stability | | ○ | ○ | × | ○ | ○ | ○ | ○ | ○ | ○ |
| | Storage stability | | × | × | ○ | ○ | ○ | ○ | ○ | ○ | ○ |
| | Hydrocarbon-based solvent | | Absent | Absent | Absent | Absent | Absent | Absent | Absent | Absent | Present |

As shown in Example 1 (Table 1), the ink composition containing a saturated fatty acid diester (di-2-ethylhexyl azelate) and an unsaturated fatty acid monoester (methyl oleate) in a predetermined mass ratio of 70% by mass in total had satisfactory low-temperature fluidity, discharge stability, and storage stability. Further, even though the ink composition of Example 1 did not contain a hydrocarbon-based solvent, the low-temperature fluidity, the discharge stability, and the storage stability thereof were the same as or more excellent than those of the ink composition of Comparative Example 9, which contained a hydrocarbon-based solvent as a solvent.

Meanwhile, as shown in Comparative Examples 1 to 3 (Table 2), in a case where the mass ratio of the saturated fatty acid diester (di-2-ethylhexyl azelate) to the unsaturated fatty acid monoester (methyl oleate) was outside a range of 2:8 to 8:2, the properties of the ink composition were insufficient. That is, it was understood that the storage stability was likely to be degraded in a case of the ink compositions of Comparative Examples 1 and 2 in which the content of the saturated fatty acid diester was small, and the relative proportion of the unsaturated fatty acid monoester was high. This suggests that the unsaturated fatty acid monoester may be denatured during storage, for example, the unsaturated group may be oxidized. Further, the ink composition of Comparative Example 3, in which the content of the unsaturated fatty acid monoester was 8.92% by mass, and the relative proportion of the saturated fatty acid diester was high, had insufficient discharge stability. That is, the ink composition of Comparative Example 3 had a relatively high viscosity.

Further, as shown in Comparative Examples 4 to 7 (Table 2), the ink compositions containing no saturated fatty acid diester had insufficient low-temperature fluidity. Particularly, in a case where a saturated fatty acid monoester-based solvent (methyl laurate (pour point of lower than 20°C) or isopropyl palmitate (pour point of 8°C to 15°C)) having a relatively high pour point was blended into the ink composition, the low-temperature fluidity was likely to be deteriorated.

In the ink composition of Comparative Example 8 (Table 2), the total content of the saturated fatty acid diester (di-2-ethylhexyl azelate) and the unsaturated fatty acid monoester (methyl oleate) was small (total content of 40% by mass), and thus the low-temperature fluidity was not sufficient.

As shown in Examples 1 to 3, the results of various evaluations were satisfactory even when the type of the unsaturated fatty acid monoester was changed (methyl oleate, isobutyl oleate, or 2-ethylhexyl oleate). Further, as shown in Examples 1 and 4 to 7, the results of various evaluations were satisfactory even when the type of the saturated fatty acid diester was changed (di-2-ethylhexyl azelate, di-2-ethylhexyl adipate, diisononyl adipate, diisodecyl adipate, or di-2-ethylhexyl sebacate). As described above, the unsaturated fatty acid monoester and the saturated fatty acid diester can be appropriately selected with reference to the disclosure of the present specification and used in the ink composition.

As shown in Examples 8 and 9, the results of various evaluations were satisfactory even when the ratio of the saturated fatty acid diester to the unsaturated fatty acid monoester was changed. Further, as shown in Examples 10 and 11, the results of various evaluations were sufficient even when the saturated fatty acid monoester was not blended into the ink composition. As described above, the contents of the unsaturated fatty acid monoester and the saturated fatty acid diester can be appropriately set with reference to the disclosure of the present specification and used for the ink composition.

Example 12 is an example in which an inert resin (methacrylic resin) was blended into the ink composition, Example 13 is an example in which a leveling agent (silicon-based surfactant) was blended into the ink composition, Example 14 is an example in which a pigment derivative was not blended into the ink composition, and Example 15 is an example in which a magenta pigment was used in place of carbon black as the color material. In all these examples, the results of the evaluations were satisfactory.

The ink composition of the present invention can be used as an ink for solvent-based inkjet printing for various applications. Particularly, the ink composition of the present invention has excellent low-temperature fluidity even in a case of containing no hydrocarbon-based solvent (including a mineral oil) and can maintain the discharge stability even when printing is continuously performed. Further, since the ink composition of the present invention is not required to contain a hydrocarbon-based solvent, the risk of being hazardous to human health is further reduced, and recycling of printed materials can be promoted. Therefore, the ink composition of the present invention is effectively used as "inkjet printing ink for industrial use", for which a large amount of ink is continuously used, and can be used as an ink for printing on various packaging materials or catalogs.

## Claims

1. An ink composition for solvent-based inkjet printing, comprising:
a colorant;
a dispersant; and
a solvent,
wherein the colorant includes a pigment and/or a dye,
the solvent includes a saturated fatty acid diester-based solvent and an unsaturated fatty acid monoester-based solvent,
a total amount of the saturated fatty acid diester-based solvent and the unsaturated fatty acid monoester-based solvent is 50% by mass or greater with respect to a total amount of the ink composition for solvent-based inkjet printing, and
a mass ratio of the saturated fatty acid diester-based solvent to the unsaturated fatty acid monoester-based solvent is 2:8 to 8:2.

2. The ink composition for solvent-based inkjet printing according to Claim 1,
wherein the saturated fatty acid diester-based solvent has a pour point of -10°C or lower.

3. The ink composition for solvent-based inkjet printing according to Claim 1 or 2,
wherein the unsaturated fatty acid monoester-based solvent has a pour point of 0°C or lower.

4. The ink composition for solvent-based inkjet printing according to any one of Claims 1 to 3,
wherein the ink composition contains no hydrocarbon-based solvent or 5% by mass or less of a hydrocarbon-based solvent with respect to the total amount of the ink composition for solvent-based inkjet printing.

5. The ink composition for solvent-based inkjet printing according to any one of Claims 1 to 4, further comprising:
a saturated fatty acid monoester as a solvent.

6. The ink composition for solvent-based inkjet printing according to any one of Claims 1 to 5,
wherein the colorant is a black pigment and/or a black dye.

7. The ink composition for solvent-based inkjet printing according to any one of Claims 1 to 6,
wherein the ink composition contains no water or 3% by mass or less of water with respect to the total amount of the ink composition for solvent-based inkjet printing.

8. The ink composition for solvent-based inkjet printing according to any one of Claims 1 to 7,
wherein the dispersant is a polymer dispersant.

## Patentansprüche

1. Tintenzusammensetzung für lösungsmittelbasierten Tintenstrahldruck, umfassend:
ein Farbmittel;
ein Dispersionsmittel; und
ein Lösungsmittel
wobei das Farbmittel ein Pigment und/oder einen Farbstoff einschließt,
das Lösungsmittel ein Lösungsmittel auf Basis gesättigter Fettsäurediester und ein Lösungsmittel auf Basis ungesättigter Fettsäuremonoester einschließt,
ein Gesamtanteil des Lösungsmittels auf Basis gesättigter Fettsäurediester und des Lösungsmittels auf Basis ungesättigter Fettsäuremonoester 50 Masseprozent oder mehr, bezogen auf eine Gesamtmenge der Tintenzusammensetzung für lösungsmittelbasierten Tintenstrahldruck, beträgt, und
ein Massenverhältnis des Lösungsmittels auf Basis gesättigter Fettsäurediester zu dem Lösungsmittel auf Basis ungesättigter Fettsäuremonoester 2:8 bis 8:2 beträgt.

2. Tintenzusammensetzung für lösungsmittelbasierten Tintenstrahldruck nach Anspruch 1,
wobei das auf gesättigten Fettsäurediestern basierende Lösungsmittel einen Fließpunkt von -10 ° C oder niedriger aufweist.

3. Tintenzusammensetzung für lösungsmittelbasierten Tintenstrahldruck nach Anspruch 1 oder 2,
wobei das auf ungesättigten Fettsäuremonoestern basierende Lösungsmittel einen Fließpunkt von 0 ° C oder niedriger aufweist.

4. Tintenzusammensetzung für lösungsmittelbasierten Tintenstrahldruck nach einem der Ansprüche 1 bis 3,
wobei die Tintenzusammensetzung kein Lösungsmittel auf Kohlenwasserstoffbasis oder 5 Masseprozent oder weniger eines Lösungsmittels auf Kohlenwasserstoffbasis in Bezug auf die Gesamtmenge der Tintenzusammensetzung für lösungsmittelbasierten Tintenstrahldruck enthält.

5. Tintenzusammensetzung für lösungsmittelbasierten Tintenstrahldruck nach einem der Ansprüche 1 bis 4, weiter umfassend:
als ein Lösungsmittel ein gesättigter Fettsäuremonoester.

6. Tintenzusammensetzung für lösungsmittelbasierten Tintenstrahldruck nach einem der Ansprüche 1 bis 5,
wobei das Farbmittel ein schwarzes Pigment und/oder ein schwarzer Farbstoff ist.

7. Tintenzusammensetzung für lösungsmittelbasierten Tintenstrahldruck nach einem der Ansprüche 1 bis 6,
wobei die Tintenzusammensetzung kein Wasser oder 3 Masseprozent oder weniger Wasser in Bezug auf die Gesamtmenge der Tintenzusammensetzung für lösungsmittelbasierten Tintenstrahldruck enthält.

8. Tintenzusammensetzung für lösungsmittelbasierten Tintenstrahldruck nach einem der Ansprüche 1 bis 7,
wobei das Dispersionsmittel ein Polymerdispersionsmittel ist.

## Revendications

1. Composition d'encre pour impression à jet d'encre à base de solvant, comprenant :
un colorant ;
un dispersant ; et
un solvant,
dans laquelle le colorant inclut un pigment et/ou une matière colorante,
le solvant inclut un solvant à base de diester d'acide gras saturé et un solvant à base de monoester d'acide gras insaturé,
une quantité totale du solvant à base de diester d'acide gras saturé et du solvant à base de monoester d'acide gras insaturé est de 50 % en masse ou supérieure par rapport à une quantité totale de la composition d'encre pour impression à jet d'encre à base de solvant, et
un rapport massique du solvant à base de diester d'acide gras saturé sur le solvant à base de monoester d'acide gras insaturé est de 2/8 à 8/2.

2. Composition d'encre pour impression à jet d'encre à base de solvant selon la revendication 1, dans laquelle le solvant à base de diester d'acide gras saturé a un point d'écoulement de -10 °C ou inférieur.

3. Composition d'encre pour impression à jet d'encre à base de solvant selon la revendication 1 ou 2,
dans laquelle le solvant à base de monoester d'acide gras insaturé a un point d'écoulement de 0 °C ou inférieur.

4. Composition d'encre pour impression à jet d'encre à base de solvant selon l'une quelconque des revendications 1 à 3,
dans laquelle la composition d'encre ne contient aucun solvant à base d'hydrocarbure ou 5 % en masse ou moins d'un solvant à base d'hydrocarbure par rapport à la quantité totale de la composition d'encre pour impression à jet d'encre à base de solvant.

5. Composition d'encre pour impression à jet d'encre à base de solvant selon l'une quelconque des revendications 1 à 4, comprenant en outre :
un monoester d'acide gras saturé en tant que solvant.

6. Composition d'encre pour impression à jet d'encre à base de solvant selon l'une quelconque des revendications 1 à 5,
dans laquelle le colorant est un pigment noir et/ou une matière colorante noire.

7. Composition d'encre pour impression à jet d'encre à base de solvant selon l'une quelconque des revendications 1 à 6,
dans laquelle la composition d'encre ne contient aucune eau ou 3 % en masse ou moins d'eau par rapport à la quantité totale de la composition d'encre pour impression à jet d'encre à base de solvant.

8. Composition d'encre pour impression à jet d'encre à base de solvant selon l'une quelconque des revendications 1 à 7,
dans laquelle le dispersant est un dispersant polymère.
